# EUROPÄISCHE PATENTSCHRIFT

(11) **EP 2 376 297 B1**
(45) Veröffentlichungstag und Bekanntmachung des Hinweises auf die Patenterteilung: **10.10.2012**
(21) Anmeldenummer: 09740894.2
(22) Anmeldetag: 28.10.2009
(51) Int. Cl.: B60C 11/03, B60C 11/12, B60C 11/13

(54) **FAHRZEUGLUFTREIFEN**
MOTOR VEHICLE PNEUMATIC TIRES
BANDAGE PNEUMATIQUE POUR VÉHICULE

(30) Priorität: 09.12.2008 DE 102008055496
(43) Veröffentlichungstag der Anmeldung: 19.10.2011
(73) Patentinhaber: Continental Reifen Deutschland GmbH, 30165 Hannover (DE)
(72) Erfinder: CELIK, Akif, 30173 Hannover (DE)
(74) Vertreter: Finger, Karsten
(86) Internationale Anmeldenummer: PCT/EP2009/064182
(87) Internationale Veröffentlichungsnummer: WO 2010/066504

(56) Entgegenhaltungen:
- JP-A- 2005 096 514
- JP-A- 2006 051 927
- US-A1- 2001 032 691
- US-A1- 2004 238 092

## Beschreibung

Die Erfindung betrifft einen Fahrzeugluftreifen mit profiliertem Laufstreifen mit durch Rillen von einander getrennten Profilelementen - insbesondere Profilblockelementen einer Profilblockreihe -, wobei die Rillen Rillenwände aufweisen, die sich aus dem Rillengrund heraus nach radial außen bis zur radial äußeren Profilmantelfläche erstrecken und jeweils die Flanke eines Profilelementes bilden.

Derartige Fahrzeugluftreifen sind bekannt. Bei den bekannten Fahrzeugluftreifen sind die Rillen mit Rillenwänden mit weitgehend ebenen Flächen ausgebildet, um den Wasserabfluss nicht zu beeinträchtigen. Die Zahl der wirkenden Griffkanten zur Erzeugung von Seitengriff bei winterlichen Straßenbedingungen wird hierdurch reduziert. Über die Lebensdauer des Fahrzeugluftreifens wird durch Abrieb auch die Wirkung von Feineinschnitten reduziert, wodurch zusätzlich Griffwirkung auf winterlichen Straßenbedingungen, z.B. auf Schnee und Schneematsch, weiter reduziert wird. Um ausreichend Steifigkeit der Profilblockelemente zu ermöglichen ist die Breitenausbildung der Rillen begrenzt. Dies führt jedoch auch zur Begrenzung der Aufnahmekapazität von Wasser, Schnee und Schneematsch durch die Rillen. Hierdurch wird auch die Aquaplaningeigenschaft begrenzt. Ein Verbreitern der Rillen zur Verbesserung der Aquaplaningeigenschaften reduziert die erreichbare Blocksteifigkeit der Profilblockelemente, wodurch ohne zusätzliche entgegenwirkende zusätzliche Maßnahmen die Trockenbrems- und Trockenhandlingeigenschaften reduziert werden.

Es ist auch bekannt die Profilrillen im Aufstandsbereich durch Versatz des Rillenverlaufes mit zusätzlichen Griffkanten auszubilden. Dies verbessert zwar den Griff auf winterlichen Straßenbedingungen, behindert jedoch den Abfluss des Wassers wodurch die Aquaplaningeigenschaften verschlechtert werden können. Über die Lebensdauer des Fahrzeugluftreifens werden bei diesen Ausbildungen aufgrund des Abriebs sowohl die Feineinschnitte als auch die durch den Versatz bedingten Griffkanten in Ihrer Wirkung reduziert bei stark abnehmendem Aufnahmevolumen für Wasser und Schnee- bzw. Schneematsch. Sowohl der Griff auf winterlichen Straßenbedingungen als auch Aquaplaningeigenschaft werden über die Lebensdauer negativ beeinflusst.

Aus der gattungsgemäßen US 2004/0238092 A1 ist es bekannt, im Bereich der Schnittkante zwischen zwei sich schneidenden Profilblockelementflanken und im Bereich zwischen einer Profilblockelementflanke und der radial äußeren Mantelfläche Ausnehmungen auszubilden.

Der Erfindung liegt daher die Aufgabe zugrunde, in einfacher Weise einen Fahrzeugluftreifen mit profiliertem Laufstreifen mit durch Rillen voneinander getrennten Profilelementen - insbesondere Profilblockelementen einer Profilblockreihe -, wobei die Rillen Rillenwände aufweisen, die sich aus dem Rillengrund heraus nach radial außen bis zur radial äußeren Profilmantelfläche erstrecken und jeweils die Flanke eines Profilelementes bilden, mit gutem Seitengriff auf Schnee- und Schneematsch und guten Aquaplaningeigenschaften bei Aufrechterhaltung hoher Blocksteifigkeit zu schaffen, der über die Lebensdauer gute Seitenführung auf Schnee- und Schneematsch ermöglicht.

Erfindungsgemäß wird die Aufgabe durch die Ausbildung eines Fahrzeugluftreifens mit profiliertem Laufstreifen mit durch Rillen voneinander getrennten Profilelementen - insbesondere Profilblockelementen einer Profilblockreihe -, wobei die Rillen Rillenwände aufweisen, die sich aus dem Rillengrund heraus nach radial außen bis zur radial äußeren Profilmantelfläche erstrecken und jeweils die Flanke eines Profilelementes bilden, gemäß den Merkmalen von Anspruch 1 gelöst, bei dem wenigstens eine durch die Rillenwand einer Rille - insbesondere einer Quer- bzw. Schrägrille - gebildete Flanke in radialer Richtung einen ersten radial äußeren und einen zweiten radial inneren Erstreckungsbereich aufweist, wobei sich der erste Erstreckungsbereich von der radial äußeren Profilmantelfläche nach radial innen bis zum zweiten Erstreckungsbereich erstreckt, wobei im zweiten Erstreckungsbereich wenigstens eine ins Profilelement erstreckte Vertiefung ausgebildet ist, die in der Rillenwand eine Schnittkontur aufweist mit in Erstreckungsrichtung der Rille sich v- oder u-förmig erweiternden Schenkeln, wobei die beiden Schenkel in ihrem Schnittpunkt eine erste Ecke bilden und die beiden anderen

Endpunkte der Schenkel durch eine weitere - insbesondere geradlinige - Konturlinie miteinander verbunden sind.

Trotz hoher Steifigkeit der Profilelemente kann auch bei schmalen Rillen durch die Vertiefungen im radial inneren Erstreckungsbereich der Flanke die Aufnahmekapazität von Wasser und Schnee- bzw. Schneematsch erhöht werden. Die Vertiefung fördert die Entsehung von Schnee-Schnee-Reibung im inneren Bereich der Rille, wodurch der Griff auf Schnee und Schneematsch verbessert werden. Die durch die Kontur bedingten zusätzlichen Kanten verstärken die Griffwirkung von Kanten im inneren der Rille und erhöhen die wirkende Griffkantenlänge auf winterlichen Fahrbahnverhältnissen zusätzlich. Über die Lebensdauer werden aufgrund des Abriebes nach Abreiben des radial äußeren Erstreckungsbereiches, wenn aufgrund des Abriebes die Profilblockelemente zusätzlich versteifen zusätzliche Kanten zur Übertragung von Kräften in Richtung längs Profilrille in der äußeren Mantelfläche geschaffen, wodurch über die Lebensdauer der Verlust der Griffkantenwirkung durch Feineinschnitte reduziert werden kann. Die Form der Konturlinie ermöglicht durch die Pfeilform in Richtung der Rillenerstreckung eine gezielte Begünstigung der Wasserleitung und eine gezielte Verdichtung von Schnee in der Vertiefung.

Besonders vorteilhaft ist die Ausbildung eines Fahrzeugluftreifens gemäß den Merkmalen von Anspruch 2, wobei die Rille eine Quer- bzw. Schrägrille ist und die beiden in der ersten Ecke sich schneidenden Schenkel sich in Erstreckungsrichtung von der nächstliegenden Reifenschulter zur Reifenäquatorebene hin v- oder u-förmig erweitert ausgebildet sind. Diese Ausbildung ermöglicht eine beschleunigte Ableitung des Wassers in Richtung Reifenschulter aus dem Profil heraus und eine besondere Verdichtung von Schnee- und Schneematsch über die Außenschulter des Reifens beim Kurvenfahren und somit gerade in der beim Kurvenfahren wichtigen seitlichen Richtung eine hohe Kraftübertragung von seitlichen Kräften.

Besonders vorteilhaft ist die Ausbildung eines Fahrzeugluftreifens gemäß den Merkmalen von Anspruch 3, wobei die Rille eine Umfangsrille eines drehrichtungsgebundenen Fahrzeugluftreifens ist und die beiden in der ersten Ecke sich schneidenden Schenkel entgegen der Drehrichtung bei Vorwärtsfahrt v- oder u-förmig erweitert ausgebildet sind. Diese Ausbildung ermöglicht eine beschleunigte Ableitung des Wassers in Umfangsrichtung des Reifens aus dem Profil heraus und eine besondere Verdichtung von Schnee- und Schneematsch beim Beschleunigen in Vorwärtsfahrt und somit gerade in der beim Beschleunigen wichtigen Drehrichtung eine hohe Kraftübertragung.

Besonders vorteilhaft ist die Ausbildung eines Fahrzeugluftreifens gemäß den Merkmalen von Anspruch 4, wobei die beiden Schenkel ausgehend von der ersten Ecke über ihre gesamte Erstreckung einen gleichen Öffnungswinkel einschließen. Auf diese Weise kann in einfacher Weise durch Wahl des Öffnungswinkels je nach Anforderung des Fahrzeugluftreifens die Traktions- und die Handlingeigenschaften des Fahrzeugluftreifens individuell eingestellt werden.

Besonders vorteilhaft ist die Ausbildung eines Fahrzeugluftreifens gemäß den Merkmalen von Anspruch 5, wobei die beiden Schenkel ausgehend von der ersten Ecke mit einem längs ihrer Erstreckung veränderten Öffnungswinkel ausgebildet sind.

Besonders vorteilhaft ist die Ausbildung eines Fahrzeugluftreifens gemäß den Merkmalen von Anspruch 6, wobei die beiden Schenkel ausgehend von der ersten Ecke mit einem längs ihrer Erstreckung - insbesondere stetig - verkleinerten Öffnungswinkel ausgebildet sind.

Besonders vorteilhaft ist die Ausbildung eines Fahrzeugluftreifens gemäß den Merkmalen von Anspruch 7, wobei die beiden Schenkel ausgehend von der ersten Ecke mit einem längs ihrer Erstreckung kontinuierlich abnehmenden Öffnungswinkel ausgebildet sind.

Besonders vorteilhaft ist die Ausbildung eines Fahrzeugluftreifens gemäß den Merkmalen von Anspruch 8, wobei die beiden Schenkel ausgehend von der ersten Ecke wenigstens einen ersten geradlinigen Erstreckungsbereich aufweisen mit einem ersten Öffnungswinkel und einen anschließenden zweiten Erstreckungsbereich, der sich jeweils bis zu dem anderen Endpunkt des Schenkels erstreckt, wobei die beiden Schenkel in ihrem zweiten Erstreckungsbereich einen öffnungswinkel aufweisen, der kleiner oder gleich groß wie der Öffnungswinkel im ersten Bereich ist.

Besonders vorteilhaft ist die Ausbildung eines Fahrzeugluftreifens gemäß den Merkmalen von Anspruch 9, wobei die beiden Schenkel zwischen dem ersten und dem zweiten Erstreckungsbereich einen dritten Erstreckungsbereich aufweisen, der in Erstreckungsrichtung der Rille kürzer als der erste und als der zweite Erstreckungsbereich ausgebildet ist, wobei im dritten Erstreckungsbereich der Öffnungswinkel der beiden Schenkel größer ausgebildet ist als der Öffnungswinkel im ersten Erstreckungsbereich.

Besonders vorteilhaft ist die Ausbildung eines Fahrzeugluftreifens gemäß den Merkmalen von Anspruch 10, wobei die ins Profilelement erstreckte Vertiefung eine Pyramidenstruktur ausweist, bei der die in der Rillenwand ausgebildete Schnittkontur die Grundfläche ist, auf der die Pyramidenstruktur ausgebildet ist, und mit einer Spitze, die das Maß der größten Erstreckung der Vertiefung von der Grundfläche in das Profilelement hinein aufweist.

Besonders vorteilhaft ist die Ausbildung eines Fahrzeugluftreifens gemäß den Merkmalen von Anspruch 11, wobei die beiden anderen Endpunkte der beiden Schenkel von einander einen Abstand H aufweisen und die durch die erste Ecke gebildete Seitenhalbierende auf die zu der die beiden anderen Ende verbindenden Abstandslinie zwischen erster Ecke und Abstandslinie eine Länge L aufweist, wobei für H und L gilt:
(1/5)L≤ H ≤ 2L, insbesondere H=0,5L. Dies ermöglicht eine Optimierung von Traktion und Handling. Das Wasser kann besonders gut aus dem Profilbereich heraus beschleunigt werden, wodurch die Aquaplaningeigenschaften weiter verbessert werden.

Besonders vorteilhaft ist die Ausbildung eines Fahrzeugluftreifens gemäß den Merkmalen von Anspruch 12, wobei die beiden von der Rille getrennten Profilelemente jeweils an ihrer radial äußeren Mantelfläche mit einem oder mehreren in Erstreckungsrichtung der Rille ausgebildeten Feineinschnitten ausgebildet sind.

Besonders vorteilhaft ist die Ausbildung eines Fahrzeugluftreifens gemäß den Merkmalen von Anspruch 13, wobei das Profilelement an seiner radial äußeren Mantelfläche mit einem oder mehreren in Erstreckungsrichtung der Rille ausgebildeten Feineinschnitten ausgebildet ist, wobei der der mit Vertiefung ausgebildeten Flanke nächstliegende Feineinschnitt mit einem Abstand b zur Flanke ausgebildet ist, wobei 3mm ≤b ≤ 6mm ist, wobei der Punkt (S) der Vertiefung, der den größten Abstand von der in der Rillenwand durch die Schnittkontur gebildeten Fläche aufweist, einen Abstand T von der in der Rillenwand durch die Schnittkontur gebildeten Fläche aufweist, wobei für T gilt: T ≤ (3/4b), insbesondere T ≤ 1mm. Die hierdurch erzielbare hohe Steifigkeit der Profilelemente ermöglicht in einfacher Weite trotz gutem Schneegriff und guter Aquaplaningeigenschaften die Optimierung von Brems- und Handlingeigenschaften auf trockener Fahrbahnoberfläche.

Besonders vorteilhaft ist die Ausbildung eines Fahrzeugluftreifens gemäß den Merkmalen von Anspruch 14, wobei der erste radial äußere Erstreckungsbereich der Flanke in radialer Richtung eine Erstreckung von mindestens 1mm aufweist. Die hierdurch erzielbare hohe Steifigkeit der Profilelemente ermöglicht in einfacher Weite trotz gutem Schneegriff und guter Aquaplaningeigenschaften die Optimierung von Brems- und Handlingeigenschaften auf trockener Fahrbahnoberfläche.

Besonders vorteilhaft ist die Ausbildung eines Fahrzeugluftreifens gemäß den Merkmalen von Anspruch 15, wobei die die beiden anderen Endpunkte der Schenkel verbindende Konturlinie einen Abstand von mindestens 2mm - insbesondere von mindestens 3,5mm - von der Rillenwand einer die Rille schneidenden zweiten Rille aufweist. Die hierdurch erzielbare hohe Steifigkeit der Profilelemente ermöglicht in einfacher Weite trotz gutem Schneegriff und guter Aquaplaningeigenschaften eine weitere Verbesserung von Brems- und Handlingeigenschaften auf trockener Fahrbahnoberfläche.

Besonders vorteilhaft ist die Ausbildung eines Fahrzeugluftreifens gemäß den Merkmalen von Anspruch 16, wobei in wenigstens einer Flanke in Erstreckungsrichtung der Rille mehrere Vertiefungen - insbesondere in Erstreckungsrichtung hintereinander - ausgebildet sind. Diese Ausbildung ermöglicht auch bei Reifen größerer Reifenbreite eine Erhöhung der Traktionsfähigkeit und gute Handlingeigenschaften.

Besonders vorteilhaft ist die Ausbildung eines Fahrzeugluftreifens gemäß den Merkmalen von Anspruch 17, wobei in einer in Umfangsrichtung U des Fahrzeugluftreifens in wenigstens einer Reifenschulter eine Profilblockreihe mit in Umfangsrichtung hintereinander angeordneten, durch Querrillen voneinander beabstandeten Profilblockelementen ausgebildet ist, wobei wenigstens in einer Querrille - insbesondere in allen Querrillen - der Profilblockreihe außerhalb der axialen Erstreckung der Aufstandsfläche des Fahrzeugluftreifens der Verlauf der die Flanke des Profilblockelements bildenden Rillenwand längs der Haupterstreckungsrichtung der Rille mit wenigstens einem Versatz quer zum Rillenverlauf ausgebildet ist. Diese Ausbildung ermöglicht in einfacher Weise die Schaffung zusätzlicher Griffkanten und eine weitere Optimierung der Traktion auf Schnee und Eis.

Die Erfindung wird im Folgenden an Hand der in den Figuren 1 bis 10 dargestellten Ausführungsbeispiele näher erläutert. Hierin zeigen
- Fig. 1: Umfangsabschnitt eines erfindungsgemäßen Laufstreifenprofils in Draufsicht,
- Fig.2: Profilblockelement einer Schulterprofilblockreihe von Fig. 1 in vergrößerter Darstellung,
- Fig.3: Schnittdarstellung durch eine Querrille der Schulterprofilblockreihe gemäß Schnitt III-III von Fig.1 mit Blick auf eine Flanke eines Profilblockelementes zur Erläuterung einer in der Flanke ausgebildeten Vertiefung,
- Fig.4: Schnittdarstellung gemäß Schnitt IV-IV von Fig.3 zur Erläuterung der Tiefenausbildung der in der Flanke ausgebildeten Vertiefung,
- Fig. 5: Darstellung gemäß Fig. 3 in alternativer Ausbildung,
- Fig. 6: Fig.6a,6b,6c,6d,6e Darstellung der Vertiefung gemäß Fig.3 in unterschiedlichen Alternativen,
- Fig. 7: vereinfachte Darstellung eines Umfangsabschnitts einer zentralen Profilrippe von Fig. 1 in Draufsicht,
- Fig. 8: Schnitt durch eine Schrägrille der Profirippe gemäß Schnitt VIII-VIII von Fig. 7,
- Fig. 9: Schnitt durch die Schrägrille der Profirippe gemäß Schnitt IX-IX von Fig. 7 und
- Fig.10: vergrößerte Detailansicht des Details X-X von Fig.1.

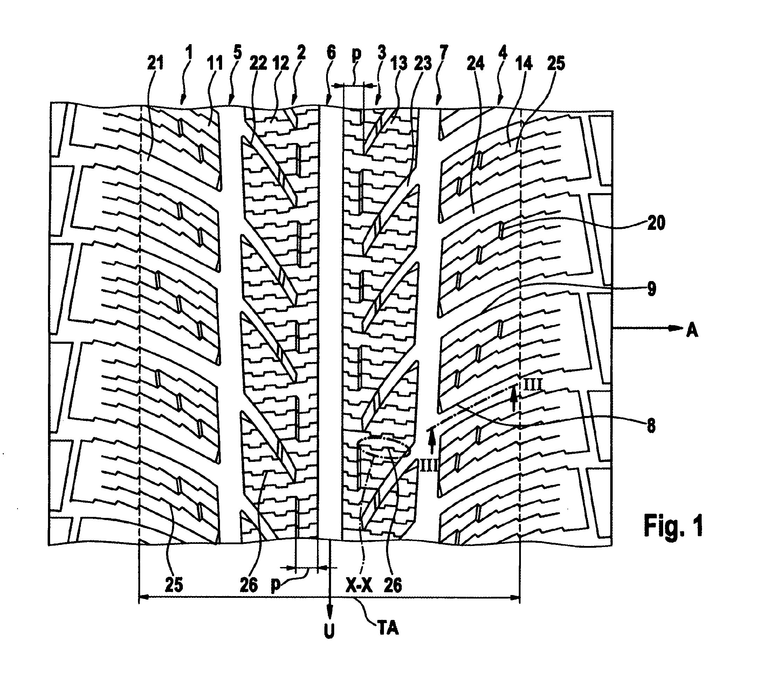

Fig.1 zeigt ein drehrichtungsgebundenes Laufstreifenprofil eines Fahrzeugluftreifens für PKW-Reifen mit Wintereignung. Dieses ist in bekannter Weise - im dargestellten Ausführungsbeispiel von Fig. 1 von links nach rechts axial nebeneinander angeordnet - mit einer Schulterprofilblockreihe 1, einer Umfangsrippe 2, einer Umfangsrippe 3 und einer Schulterprofilblockreihe 4 ausgebildet. Die Schulterprofilblockreihe 1 ist über den Umfang des Fahrzeugluftreifens in Umfangsrichtung U des Fahrzeugluftreifens erstreckt aus über den Umfang verteilt hintereinander angeordneten und jeweils durch eine Querrille 21 voneinander getrennt angeordneten Profilblockelementen 11 bekannter Art ausgebildet. Die Schulterprofilblockreihe 4 ist über den Umfang des Fahrzeugluftreifens in Umfangsrichtung U erstreckt aus über den Umfang verteilt hintereinander angeordneten und jeweils durch eine Querrille 24 voneinander getrennt angeordneten Profilblockelementen 14 bekannter Art ausgebildet. Die Profilrippe 2 und die Profilrippe 3 sind jeweils über den Umfang des Fahrzeugluftreifens in Umfangrichtung U erstreckt ausgebildet und in axialer Richtung A des Fahrzeugluftreifens voneinander durch eine in Umfangsrichtung U ausgerichtete Umfangsrille 6 voneinander getrennt. Die Schulterprofilblockreihe 1 und die Umfangsrippe 2 sind axial voneinander durch eine über den Umfang des Fahrzeugluftreifens erstreckte in Umfangsrichtung U ausgerichtete Umfangsrille 5 voneinander getrennt ausgebildet. Die Profilrippe 3 und die Schulterprofilblockreihe 4 sind in axialer Richtung A durch eine in Umfangsrichtung U des Fahrzeugluftreifens über den Umfang erstreckt ausgebildete Umfangsrille 7 voneinander getrennt ausgebildet.

Ausgehend von der Umfangsrille 5 erstrecken sich parallele Schrägrillen 22 in axialer Richtung A in die Profilrippe 2 hinein und enden in der Profilrippe 2 im axialen Abstand p von der Umfangsrille 6 stumpf. Ausgehend von der Umfangsrille 7 erstrecken sich parallele Schrägrillen 23 in axialer Richtung A in die Profilrippe 3 hinein und enden in der Profilrippe 3 im axialen Abstand p von der Umfangsrille 6 stumpf. In Umfangsrichtung U des Fahrzeugluftreifens sind die stumpfen Enden der Schrägrillen 22 jeweils in einer Umfangsposition zwischen der Umfangsposition zweier stumpfer Enden der Schrägrillen 23 angeordnet. Die Schrägrillen 22 und 23 sind in axialer Richtung gesehen ausgehend von der zentralen Umfangsrille 6 jeweils zu der nächstgelegenen Reifenschulter hin mit einem Neigungswinkel zur axialen Richtung mit einer Umfangskomponente, die entgegengerichtet zu der in Fig.1 eingetragenen Umfangsrichtung U ist, ausgebildet. Der Neigungswinkel nimmt dabei zur Reifenschulter hin ab. Über die Umfangsrille 5 hinweg geht jede Schrägrille 22 in eine Querrille 21 der Schulterprofilblockreihe 1 über. Über die Umfangsrille 7 hinweg geht jede Schrägrille 23 in eine Querrille 24 der Schulterprofilblockreihe 4 über. Auch die Querrillen 21 und 24 sind in axialer Richtung zu der nächstgelegenen Reifenschulter hin gesehen mit einem Neigungswinkel zur axialen Richtung mit einer Umfangskomponente ausgebildet, die entgegengerichtet zu der in Fig.1 eingetragenen Umfangsrichtung U ist. In der dargestellten Ausführung bilden die Querrillen 21, die Schrägrillen 22, die Schrägrillen 23 und die Querrillen 24 zusammen einen V-förmigen Rillenverlauf des Laufstreifenprofils.

Die Profilblockelemente 11 der Schulterprofilblockreihe 1 sind mit in ihrem Erstreckungsverlauf im Wesentlichen parallel zueinander und parallel zu den Querrillen 21 ausgebildeten Feineinschnitten 25 ausgebildet. Ebenso sind die Profilblockelemente 14 der Schulterprofilblockreihe 4 mit in ihrem Verlauf im Wesentlichen parallel zueinander ausgerichteten und parallel zu den Querrillen 24 verlaufenden Feineinschnitten 25 ausgebildet. Die Feineinschnitte 25 der Profilblockelemente 11 erstrecken sich dabei innerhalb des axialen Erstreckungsbereich der Aufstandsbreite TA des Laufstreifenprofils jeweils ausgehend von der Umfangsrille 5 über den gesamten axialen Erstreckungsbereich hindurch bis in einen Bereich axial außerhalb der Aufstandsbreite TA. Die Feineinschnitte 25 der Profilblockelemente 14 erstrecken sich ausgehend von der Umfangsrille 7 durch den gesamten axialen Erstreckungsbereich innerhalb der Aufstandsbreite TA des Profilblockelementes 14 hin durch bis in einen Bereich außerhalb der Aufstandsbreite TA. Die Feineinschnitte 25 sind in ihrem Verlauf jeweils treppenförmig ausgebildet, so dass sie jeweils nach einem in axialer Richtung erfolgten längeren Erstreckungsabschnitt einen hierzu quer verlaufenden kurzen Versatz in die eingetragene Umfangsrichtung U mit gleicher Orientierung der Versatzrichtung aufweisen. Jeweils zwei benachbarte Feineinschnitte 25 sind durch einen Entkopplungseinschnitt 20 miteinander derart verbunden, dass sie jeweils in der Position ihres Versatzes miteinander verbunden sind.

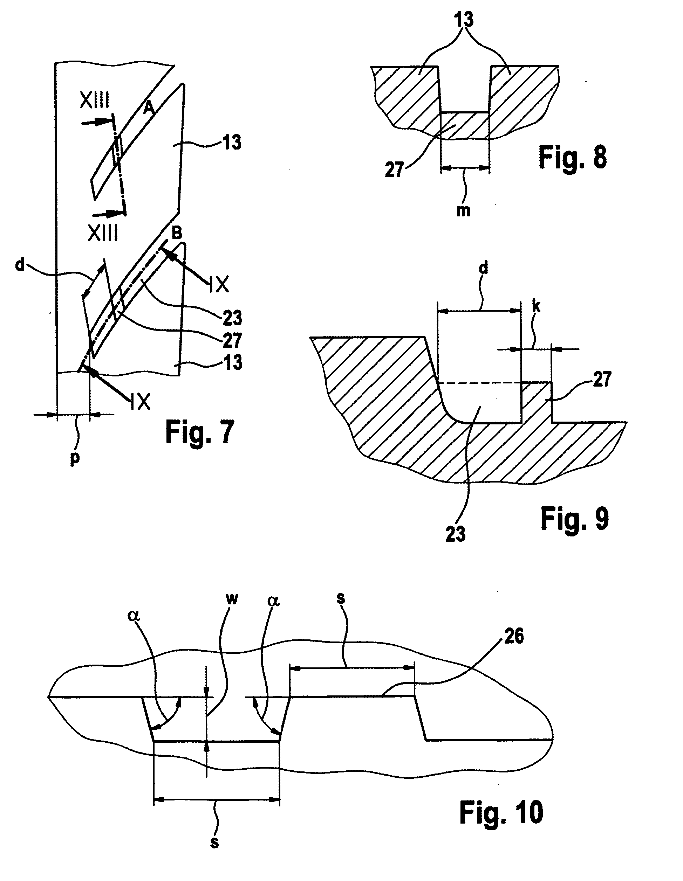

Die Profilrippen 3 und 4 sind jeweils mit über die gesamte axiale Breite der Profilrippe 3 bzw. 4 erstreckten, in ihrem Verlauf im Wesentlichen axial ausgerichteten Feineinschnitten 26 ausgebildet, die im gesamten axialen Erstreckungsbereich der Schrägrillen 22 bzw. 23 einen trapezförmigen Verlauf aufweisen. Wie in Fig. 10 zu erkennen ist, erstrecken sich die Feineinschnitte 26 dabei jeweils zunächst über einen im Wesentlichen axial verlaufenden Abschnitt der Länge s, um an dessen Ende einen Versatz um ein Versatzmaß w mit Orientierung in eine Umfangsrichtung aufzuweisen. In dessen Anschluss erstreckt sich der Feineinschnitt 26 jeweils wieder über einen im Wesentlichen axial verlaufenden Abschnitt der Länge s. Am Ende dieses Erstreckungsabschnitts ist der Feineinschnitt 26 wieder mit einem Versatz mit Versatzmaß w jedoch in die entgegengesetzte Umfangsorientierung der Versatzrichtung zur Versatzrichtung des vorangegangenen Versatzes ausgebildet. An diesen Versatz schließt sich wiederum ein im Wesentlichen axial verlaufender Abschnitt der Länge s an. Im Bereich des Versatzes ist die Richtung des Feineinschnitts jeweils unter einem Winkel α zur Erstreckungsrichtung des im Wesentlichen axial verlaufenden Abschnitt der Länge s ausgebildet, wobei α beispielsweise 45° beträgt.

Die Maße s und w sind so gewählt, dass für sie gilt: (2w) ≤ s ≤ (10w).

In einem Beispiel sind die Erstreckungslängen s so gewählt, dass 3mm ≤ s ≤ 12 mm gewählt.

Die Feineinschnitten 26 sind - wie in Fig. 1 zu erkennen - im axialen Erstreckungsbereich zwischen stumpfem Ende der Schrägrillen 22 bzw. 23 und Umfangsrille 6 mit treppenförmigem Verlauf ausgebildet.

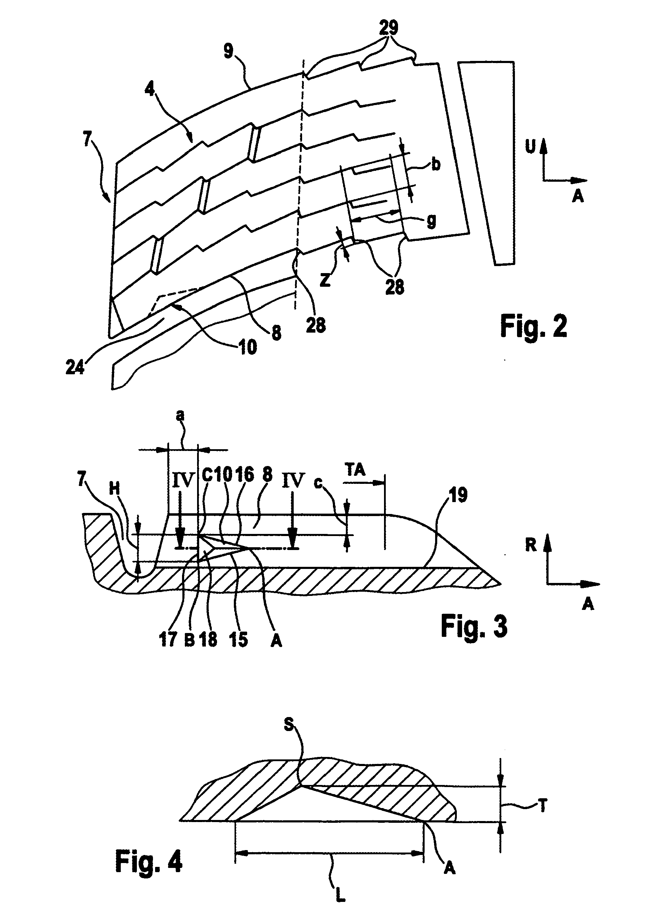

Die Querrillen 21 und 24 sind - wie am Beispiel der Profilblockreihe 4 für die Querrillen 24 in den Figuren 2 und 4 dargestellt - jeweils mit einem Rillengrund 19 und mit zwei Rillenwänden ausgebildet, wobei die eine Rillenwand jeweils eine Flanke 8 und die andere Rillenwand eine Flanke 9 der beiden durch die jeweilige Querrille 21 bzw. 24 voneinander getrennten Profilblockelemente 11 bzw. 14 bilden. Im axialen Erstreckungsbereich TA der Bodenaufstandsfläche sind die Rillenwände und somit die Flanken 8 und 9 jeweils weitgehend als glatte, ebene Flächen ausgebildet.

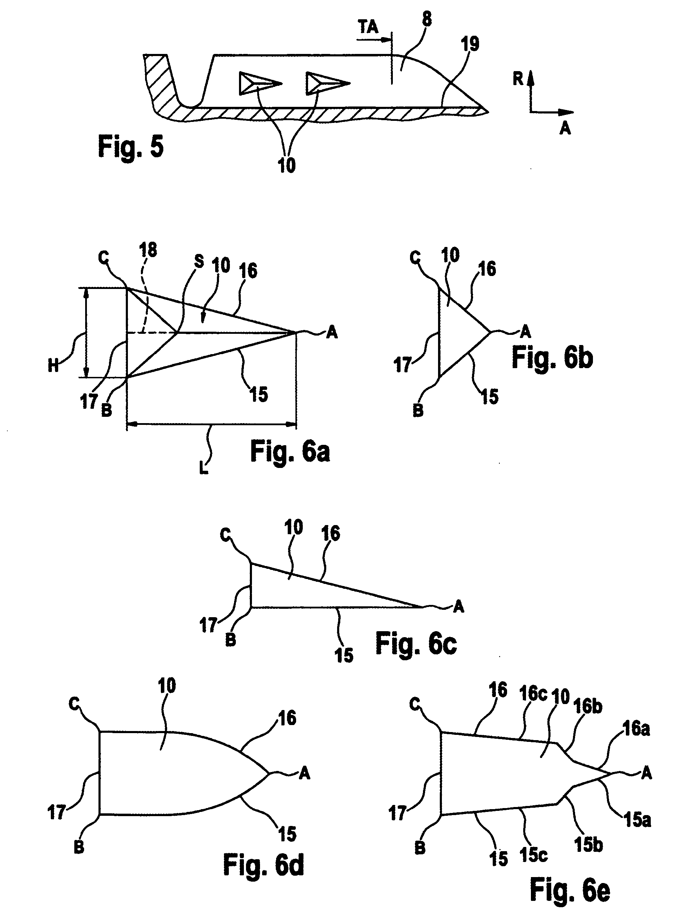

Wie in den Fig. 2, Fig. 3 und Fig. 4 am Beispiel einer Flanke 8 eines Profilblockelementes 14 der Schulterprofilblockreihe 4 dargestellt ist, ist in einem radial äußeren Erstreckungsbereich der radialen Erstreckung c die jeweilige Rillenwand und somit die Flanke 8 vollständig als glatte ebene Fläche ausgebildet. Radial nach innen schließt sich an diesen radial äußeren Erstreckungsbereich c ein radial innerer Erstreckungsbereich an, in dem eine Vertiefung 10 ausgebildet ist, die in das Profilblockelement 14 hineinreicht. Die Vertiefung 10 ist in ihrer Schnittkontur mit der Flanke 8 mit einer dreieckigen Konturlinie mit den Dreieckspunkten A, B, C und den Schenkeln 15, 16, 17 ausgebildet. Der Schenkel 15 verbindet die Dreiecksspitze A mit dem Dreieckspunkt B, der Schenkel 16 verbindet die Dreiecksspitze A mit dem Dreieckspunkt C. In Fig. 3 erstrecken sich die beiden Schenkel 15 und 16 jeweils ausgehend von dem Dreieckspunkt A in axialer Richtung A aus Richtung von der nächstliegenden Reifenschulter gesehen in Richtung Äquatorebene des Reifens und enden dort im Punkt B bzw. im Punkt C. In Fig. 3 ist der Öffnungswinkel der beiden Schenkel 15 und 16 über deren gesamte Erstreckung gleich groß gewählt. Der Schenkel 17 bildet die dritte Dreiecksseite und ist in der in Fig. 3 dargestellten Ausführung in radialer Richtung R erstreckt ausgerichtet. Die Seitenhalbierende 18 durch den Dreieckspunkt A auf die die beiden Dreieckspunkte B und C miteinander verbindende durch den Schenkel 17 gebildete Dreiecksseite ist - wie in Fig. 5a und Fig.4 dargestellt - mit einer Länge L ausgebildet. Die Vertiefung 10 ist pyramidenähnlich ausgebildet, wobei die Pyramide hier als Tetraeder, d.h. als eine Pyramide mit einer dreieckigen Grundfläche mit den Ecken A, B, C und mit einer Pyramidenspitze S ausgebildet ist. Die Pyramidenspitze S gibt den am tiefsten in das Profilblockelement erstreckt angeordneten Punkt der Vertiefung an.

Das Tiefenmaß T, d.h. der Abstand der Spitze S vom Dreieck mit den Dreieckspunkten A, B, C ist dabei so gewählt, dass für T gilt: T ≤ (3/4 b). Dabei gibt b den Abstand des zur Flanke nächstgelegenen Feineinschnitts 25 des zur Flanke 8 gehörigen Profilblockelementes 14 von der Flanke 8 an. Der Abstand b ist dabei so gewählt, dass 3 mm ≤ b ≤ 6mm.

In einem Ausführungsbeispiel ist T zusätzlich so gewählt, dass T ≤ 1mm, beispielsweise 0,8 mm ausgebildet ist.

In Fig.3 ist der Abstand zwischen den Punkten B und C, d.h. die Länge des Schenkels 17 mit H bezeichnet. Die Erstreckungsmarse H und L sind dabei so gewählt, dass hierfür gilt: (1/5 L) ≤ H ≤ (2L). In einem Ausführungsbeispiel ist H = 0,5 L gewählt.

Der Abstand der die beiden Eckpunkte B und C miteinander verbindenden Konturlinie, d.h. in Fig. 3 des durch die Dreieckspunkte B und C verlängerten Schenkels 17, zu der durch die Rillenwand der die Querrille 24 schneidenden, das Profilblockelement 14 axial begrenzenden Umfangsrille 7 gebildeten Flanke des Profilblockelements ist in Fig. 3 mit der Erstreckungslänge a eingezeichnet, wobei a so gewählt, dass a mindestens 2mm groß ist.

In einem besonderen Ausführungsbeispiel ist a mit mindestens 3,5 mm ausgebildet.

In dem in Fig.3 dargestellten Ausführungsbeispiel ist a mit 5 mm ausgebildet.

Fig. 4 zeigt eine alternative Ausbildung, bei der in Erstreckungsrichtung der Querrille 24 innerhalb des axialen Erstreckungsbereiches TA der Reifenaufstandsfläche zwei derartige Vertiefungen 10 hintereinander, jedoch beabstandet zueinander angeordnet ausgebildet sind.

In einem alternativen Ausbildungsbeispiel ist jeweils in einer Flanke 8 eine Vertiefung 10 und in der Flanke 9 keine Vertiefung ausgebildet.

In einer anderen alternativen Ausbildung ist in beiden Flanken 8 und 9 jeweils eine Vertiefung 10 ausgebildet.

In einer anderen alternativen Ausbildung ist jeweils in Flanke 8 eine Vertiefung 10 und in Flanke 9 sind jeweils zwei oder mehr Vertiefungen 10 ausgebildet.

In einer anderen alternativen Ausbildung sind in beiden Flanken 8 und 9 jeweils zwei oder mehrere Vertiefungen ausgebildet.

In einer alternativen Ausbildung ist in Flanke 8 keine Vertiefung und in Flanke 9 sind eine oder mehrere Vertiefungen 10 ausgebildet.

Fig.6b zeigt eine Ausbildung mit von der in Fig.3 und Fig.6a abweichenden alternativen Form der in der Flanke 8 ausgebildeten dreieckförmigen Konturlinie der Vertiefung 10. Wie in der in der Fig.6a dargestellten Ausführung ist auch bei der in Fig.6b dargestellten Ausführung jeweils ein gleichschenkliges Dreieck dargestellt, bei der die Schenkellängen der Schenkel 15 und 16 jeweils gleich groß gewählt sind. Die Ausführung von Fig. 6a zeigt einen spitzen Öffnungswinkel der Schenkel 15 und 16. Fig. 6b zeigt eine Ausführung mit rechtem Winkel zwischen den Schenkeln 15 und 16.

Fig. 6c zeigt eine weitere alternative Ausbildung der dreieckförmigen Konturlinie der Vertiefung 10, bei der die beiden Schenkel 15 und 17 einen rechten Winkel einschließen.

Fig. 6d zeigt eine Ausführung der Konturlinie der Vertiefung 10, bei der die Schenkel 15 und 16 ausgehend vom Dreieckspunkt A längs ihrer Erstreckung in der Querrille 24 in Richtung Reifenäquatorebene einen über ihren Erstreckungsbereich veränderten Öffnungswinkel aufweisen. In dem in Fig. 6d dargestellten Ausführungsbeispiel ist der Öffnungswinkel ausgehend vom Dreieckspunkt A längs der Erstreckung in der Querrille 24 in Richtung Reifenäquatorebene stetig und kontinuierlich verkleinert ausgebildet. Bei einer Ausbildung entsprechend der Konturlinie von Fig. 6d ist die Ausbildung nicht V sonder U-förmig erweitert.

Fig. 6e zeigt eine weitere alternative Ausbildung, wobei der Schenkel 15 jeweils drei Erstreckungsbereiche 15a, 15b und 15c und der Schenkel 16 ebenfalls drei den Erstreckungsbereichen 15a, 15b und 15c zugeordnete Erstreckungsbereiche 16a, 16b und 16c aufweisen. Ausgehend vom Dreieckspunkt A schließen die Schenkel 15 und 16 dabei längs ihrer Erstreckung in der Querrille 24 in Richtung Reifenäquatorebene in einem ersten Erstreckungsbereich 15a bzw. 16a einen ersten Öffnungswinkel ein. In einem sich anschließenden zweiten, Erstreckungsbereich 15b bzw. 16b schließen die Schenkel 15 und 16 einen zweiten Öffnungswinkel ein, der größer ist als der erste Öffnungswinkel. Im Anschluss an die zweiten Erstreckungsbereiche 15b und 16b der Schenkel 15 und 16 weisen die Schenkel 15 und 16 einen dritten Erstreckungsbereich 15c und 16c auf, die sich bis zum Dreieckspunkt B bzw. C erstrecken. In diesem dritten Erstreckungsbereich 15c bzw. 16c schließen die Schenkel 15 und 16 einen dritten Öffnungswinkel ein, der kleiner ist als der zweite Öffnungswinkel. Im dargestellten Ausführungsbeispiel ist der dritte Öffnungswinkel auch kleiner gewählt als der erste Öffnungswinkel. In einem nicht dargestellten, alternativen Ausführungsbeispiel ist der dritte Öffnungswinkel gleich groß gewählt wie der erste Öffnungswinkel.

Die Figuren 7, 8 und 9 zeigen einen Umfangsabschnitt der Profilrippen 2 und 3 am Beispiel der Profilrippe 3, wobei zur Vereinfachung die Feineinschnitte 26 nicht mit eingezeichnet sind.

In Fig. 7 ist deutlich zu erkennen, dass sich jede Schrägrille 23 ausgehend von der Umfangsrille 7 in axialer Richtung bis zu einer axialen Position, die in der radial äußeren Mantelfläche des Reifenprofils einen axialen Abstand p von der Umfangsrille 6 aufweist, in die Profilrippe 3 hinein erstreckt. Längs der Erstreckung der Schrägrille 23 ist im Abstand d vom stumpfen Ende ein Steg 27 zur Anbindung der durch die Schrägrille 23 getrennten Profilrippenelemente 13 der Profilrippe 3 ausgebildet. Der Steg 27 erstreckt sich mit einer Erstreckungslänge k in Erstreckungsrichtung der Schrägrille 23. Die Ausrichtung des Steges 27 quer zur Rillenerstreckung ist im Wesentlichen parallel zur Erstreckungsrichtung des stumpfen Endes der Schrägrille 23 gewählt. Die Erstreckungslänge des Steges 27 quer zur Erstreckung der Schrägrille 23 ist mit dem Erstreckungsmaß m in Fig. 8 eingezeichnet, wobei m das gemittelte Maß der beiden an der radial äußeren Oberfläche ausgebildeten Kantenlängen des Steges 27 darstellt. Auch das Maß k und das Maß d werden in der radialen Position der den Steg 27 nach radial außen begrenzenden Mantelfläche gemessen. Für die Maße k und m gelten folgende Beziehungen: (2k) ≤ m ≤ (6k). Für die Maße d und p gelten folgende Beziehungen: (0,5 d) ≤ p ≤ (2d).

Wie in Fig. 1 und in Fig.2 zu erkennen ist, sind die Querrillen 24 der Schulterprofilblockreihe 4 und die Querrillen 21 der Schulterprofilblockreihe 1 im axialen Erstreckungsbereich außerhalb der Bodenaufstandsfläche TA mit ihren Rillenwänden anders als im axial inneren Erstreckungsbereich der Bodenaufstandsfläche TA ausgebildet. In dem axialen Erstreckungsbereich außerhalb der Bodenaufstandsfläche TA bilden die Rillenwände der Querrillen 24 und 21 jeweils Flanken 8 bzw. 9 der durch sie getrennten Profilblockelemente14 bzw. 11 mit einem stufenförmigen Versatz 28 der jeweiligen Flanke 8 und 9 quer zur Erstreckungsrichtung der Querrille 24 bzw. 21. Der erste Versatz 28 bzw. 29 ist jeweils unmittelbar im Anschluss an die Bodenaufstandsfläche TA ausgebildet. Der Versatz 28 bzw. 29 weist jeweils ein Versatzmaß z in Richtung quer zur Erstreckungsrichtung der Querrille 24 bzw. 21 auf. Im Anschluss daran erstreckt sich die jeweilige Profilwand 8 bzw. 9 in Erstreckungsrichtung der Querrille 24 bzw. 21 über eine Erstreckungslänge mit dem Erstreckungsmaß g. Im Anschluss daran ist die Flanke 8 bzw. 9 wieder jeweils mit einem Versatz 28 bzw. 29 quer zur Erstreckungsrichtung der Querrille 24 bzw. 21 mit einem Versatzmaß z ausgebildet, an das sich wiederum ein Erstreckungsabschnitt der Flanke 8 bzw. 9 in Erstreckungsrichtung der Querrille 24 bzw. 21 über eine Erstreckungslänge mit dem Erstreckungsmaß g anschließt. Auf diese Weise ist außerhalb der Bodenaufstandsfläche die Flanke 8 und die Flanke 9 mit einer alternierenden Ausbildung aus Erstreckung der Flanke 8 bzw. 9 längs der Erstreckungsrichtung der Querrille 24 bzw. 21 mit Erstreckungsmaß g ausgebildeten Abschnitten und aus quer zur Erstreckungsrichtung der Querrille 24 bzw. 21 ausgebildetem Versatz 28 bzw. 29 mit Versatzmaß z ausgebildet. Dieser regelmäßige Versatz 28 bzw. 29 bildet außerhalb der Aufstandsfläche zusätzliche Kanten, die über die gesamte radiale Erstreckung der Querrille 24 bzw. 21 bis in den Rillengrund reichen und über die gesamte Lebensdauer des Reifens als zusätzliche Kanten zur Verfügung stehen. Der Versatz 28 der Flanken 8 erfolgt in axialer Richtung von der Reifenäquatorebene zur Reifenschulter hin gesehen jeweils in Richtung zur Querrille 24 bzw. 21. Der Versatz 29 der Flanken 9 erfolgt in axialer Richtung von der Reifenäquatorebene zur Reifenschulter hin gesehen jeweils in Richtung von der Querrille 24 bzw. 21 weg ins Profilblockelement 14 bzw. 11.

Wie in Fig. 1 und 2 zu erkennen ist, ist in diesem Abschnitt axial außerhalb der Bodenaufstandsfläche TA die jeweilige Flanke 8 bzw. 9 eines Profilblockelementes 14 bzw. 11 in ihrem Verlauf in gleicher Weise ausgebildet wie die dazwischen angeordneten Feineinschnitte 25.

Für das Erstreckungsmaß g und das Versatzmaß z gilt:
(0,2 b) ≤ z ≤ (0,8 b) und 3mm ≤ g ≤ 15mm

In einer nicht dargestellten Ausführung sind auch in den durch die Rillenwand einer Umfangsrille gebildeten Flanken eines Profilblockelementes einer Profilblockreihe, beispielsweise in den durch die Rillenwände der Umfangsrille 7 gebildeten Flanken der Profilblockelmente 14 und der Profilelemente 13 jeweils entsprechende Vertiefungen 10 ausgebildet. In Fig. 1 gibt die nach unten dargestellte Umfangsorientierung die Drehrichtung bei Vorwärtsfahrt an. Die Ecke A der Vertiefungen 10 ist in Drehrichtung bei Vorwärtsfahrt und die beiden Schenkel 15 und 16 ausgehend von der Ecke entgegen der Drehrichtung bei Vorwärtsfahrt, d.h. in der Darstellung von Fig. 1 vom Punkt A ausgehend nach oben hin bis zu Punkten B bzw. C ausgebildet.

### Bezugszeichenliste (Teil der Beschreibung)

- 1: Schulterprofilblockreihe
- 2: Profilrippe
- 3: Profilrippe
- 4: Schulterprofilblockreihe
- 5: Umfangsrille
- 6: Umfangsrille
- 7: Umfangsrille
- 8: Profilblockflanke
- 9: Profilblockflanke
- 10: Vertiefung
- 11: Profilblockelement
- 12: Profilrippenelement
- 13: Profilrippenelement
- 14: Profilblockelement
- 15: Schenkel
- 16: Schenkel
- 17: Schenkel
- 18: Seitenhalbierende
- 19: Rillengrund
- 20: Entkopplungseinschnitt
- 21: Querrille
- 22: Schrägrille
- 23: Schrägrille
- 24: Querrille
- 25: Feineinschnitt
- 26: Feineinschnitt
- 27: Steg
- 28: Versatz
- 29: Versatz

## Patentansprüche

1. Fahrzeugluftreifen mit profiliertem Laufstreifen mit durch Rillen (21,24) von einander getrennten Profilelementen (11,14) - insbesondere Profilblockelementen einer Profilblockreihe -, wobei die Rillen (21,24) Rillenwände aufweisen, die sich aus dem Rillengrund heraus nach radial außen bis zur radial äußeren Profilmantelfläche erstrecken und jeweils die Flanke (8,9) eines Profilelementes bilden, und
wenigstens eine durch die Rillenwand einer Rille (24) - insbesondere einer Quer- bzw. Schrägrille - gebildete Flanke (8) in radialer Richtung R einen ersten radial äußeren und einen zweiten radial inneren Erstreckungsbereich aufweist, wobei sich der erste Erstreckungsbereich von der radial äußeren Profilmantelfläche nach radial innen bis zum zweiten Erstreckungsbereich erstreckt, wobei im zweiten Erstreckungsbereich wenigstens eine ins Profilelement (14) erstreckte Vertiefung (10) ausgebildet ist, die in der Rillenwand eine Schnittkontur aufweist mit in Erstreckungsrichtung der Rille (24) sich v- oder u-förmig erweiternden Schenkeln (15,16), wobei die beiden Schenkel (15,16) in ihrem Schnittpunkt (A) eine erste Ecke bilden
**dadurch gekennzeichnet,**
**dass** die beiden anderen Endpunkte (B,C) der Schenkel (15,16) durch eine weitere - insbesondere geradlinige - Konturlinie (17) miteinander verbunden sind.

2. Fahrzeugluftreifen gemäß den Merkmalen von Anspruch 1,
wobei die Rille (24) eine Quer- bzw. Schrägrille ist und die beiden in der ersten Ecke (A) sich schneidenden Schenkel (15,16) sich in Erstreckungsrichtung von der nächstliegenden Reifenschulter zur Reifenäquatorebene hin v- oder u-förmig erweitert ausgebildet sind.

3. Fahrzeugluftreifen gemäß den Merkmalen von Anspruch 1,
wobei die Rille eine Umfangsrille (5,6,7) eines drehrichtungsgebundenen Fahrzeugluftreifens ist und die beiden in der ersten Ecke sich schneidenden Schenkel (15,16) entgegen der Drehrichtung bei Vorwärtsfahrt v- oder u-förmig erweitert ausgebildet sind.

4. Fahrzeugluftreifen gemäß den Merkmalen von Anspruch 1,2 oder 3,
wobei die beiden Schenkel (15,16) ausgehend von der ersten Ecke (A) über ihre gesamte Erstreckung einen gleichen Öffnungswinkel einschließen.

5. Fahrzeugluftreifen gemäß den Merkmalen von Anspruch 1,2 oder 3,
wobei die beiden Schenkel (15,16) ausgehend von der ersten Ecke (A) mit einem längs ihrer Erstreckung veränderten Öffnungswinkel ausgebildet sind.

6. Fahrzeugluftreifen gemäß den Merkmalen von Anspruch 5,
wobei die beiden Schenkel (15,16) ausgehend von der ersten Ecke (A) mit einem längs ihrer Erstreckung - insbesondere stetig - verkleinerten Öffnungswinkel ausgebildet sind.

7. Fahrzeugluftreifen gemäß den Merkmalen von Anspruch 6,
wobei die beiden Schenkel (15,16) ausgehend von der ersten Ecke (A) mit einem längs ihrer Erstreckung kontinuierlich abnehmenden Öffnungswinkel ausgebildet sind.

8. Fahrzeugluftreifen gemäß den Merkmalen von Anspruch 1,2 oder 3,
wobei die beiden Schenkel (15,16) ausgehend von der ersten Ecke (A) wenigstens einen ersten geradlinigen Erstreckungsbereich (15a,16a) aufweisen mit einem ersten Öffnungswinkel und einen anschließenden zweiten Erstreckungsbereich (15c,16c), der sich jeweils bis zu dem anderen Endpunkt (B,C) des Schenkels (15,16) erstreckt, wobei die beiden Schenkel (15,16) in ihrem zweiten Erstreckungsbereich (15c,16c) einen Öffnungswinkel aufweisen, der kleiner oder gleich groß wie der Öffnungswinkel im ersten Erstreckungsbereich (15a,16a) ist.

9. Fahrzeugluftreifen gemäß den Merkmalen von Anspruch 8,
wobei die beiden Schenkel (15,16) zwischen dem ersten (15a,16a) und dem zweiten (15c,16c) Erstreckungsbereich einen dritten (15b,16b) Erstreckungsbereich aufweisen, der in Erstreckungsrichtung der Rille (21,24) kürzer als der erste (15a,16a) und als der zweite (15c,16c) Erstreckungsbereich ausgebildet ist, wobei im dritten Erstreck-ungsbereich (15b,16b) der Öffnungswinkel der beiden Schenkel (15,16) größer ausgebildet ist als der Öffnungswinkel im ersten Erstreckungsbereich (15a,16a).

10. Fahrzeugluftreifen gemäß den Merkmalen von einem oder mehreren der vorangegangenen Ansprüche,
wobei die ins Profilelement (11,14) erstreckte Vertiefung (10) eine Pyramidenstruktur ausweist, bei der die in der Rillenwand ausgebildete Schnittkontur die Grundfläche ist, auf der die Pyramidenstruktur ausgebildet ist, und mit einer Spitze (S), die das Maß der größten Erstreckung T der Vertiefung von der Grundfläche in das Profilelement hinein aufweist.

11. Fahrzeugluftreifen gemäß den Merkmalen von einem oder mehreren der vorangegangenen Ansprüche,
wobei die beiden anderen Endpunkte (B,C) der beiden Schenkel (15,16) von einander einen Abstand H aufweisen und die durch die erste Ecke (A) gebildete Seitenhalbierende (18) auf die zu der die beiden anderen Ende (B,C) verbindenden Abstandslinie (17) zwischen erster Ecke (A) und Abstandslinie (17) eine Länge L aufweist, wobei für H und L gilt:
(1/5)L≤ H ≤ 2L, insbesondere H=0,5L.

12. Fahrzeugluftreifen gemäß den Merkmalen von einem oder mehreren der vorangegangenen Ansprüche,
wobei die beiden von der Rille (21,24) getrennten Profilelemente (11,14) jeweils an ihrer radial äußeren Mantelfläche mit einem oder mehreren in Erstreckungsrichtung der Rille (21,24) ausgebildeten Feineinschnitten (25) ausgebildet sind.

13. Fahrzeugluftreifen gemäß den Merkmalen von einem oder mehreren der vorangegangenen Ansprüche,
wobei das Profilelement (11,14) an seiner radial äußeren Mantelfläche mit einem oder mehreren in Erstreckungsrichtung der Rille ausgebildeten Feineinschnitten (25) ausgebildet ist, wobei der der mit Vertiefung (10) ausgebildeten Flanke (8,9) nächstliegende Feineinschnitt (25) mit einem Abstand b zur Flanke (8,9) ausgebildet ist, wobei 3mm ≤ b ≤ 6mm ist,
wobei der Punkt (S) der Vertiefung (10), der den größten Abstand von der in der Rillenwand durch die Schnittkontur gebildeten Fläche aufweist, einen Abstand T von der in der Rillenwand durch die Schnittkontur gebildeten Fläche aufweist, wobei für T gilt: T ≤ (3/4b), insbesondere T ≤ 1mm.

14. Fahrzeugluftreifen gemäß den Merkmalen von einem oder mehreren der vorangegangenen Ansprüche,
wobei der erste radial äußere Erstreckungsbereich der Flanke (8,9) in radialer Richtung R eine Erstreckung c von mindestens 1 mm aufweist.

15. Fahrzeugluftreifen gemäß den Merkmalen von einem oder mehreren der vorangegangenen Ansprüche,
wobei die die beiden anderen Endpunkte (B,C) der Schenkel (15,16) verbindende Konturlinie (17) einen Abstand a von mindestens 2mm - insbesondere von mindestens 3,5mm - von der Rillenwand einer die Rille (21,24) schneidenden zweiten Rille (5,7) aufweist.

16. Fahrzeugluftreifen gemäß den Merkmalen von einem oder mehreren der vorangegangenen Ansprüche,
wobei in wenigstens einer Flanke (8) in Erstreckungsrichtung der Rille (21,24) mehrere Vertiefungen (10) - insbesondere in Erstreckungsrichtung hintereinander - ausgebildet sind.

17. Fahrzeugluftreifen gemäß den Merkmalen von einem oder mehreren der vorangegangenen Ansprüche,
wobei in einer in Umfangsrichtung U des Fahrzeugluftreifens in wenigstens einer Reifenschulter eine Profilblockreihe (4) mit in Umfangsrichtung hintereinander angeordneten, durch Querrillen (24) voneinander beabstandeten Profilblockelementen (14) ausgebildet ist, wobei wenigstens in einer Querrille (14) - insbesondere in allen Querrillen - der Profilblockreihe (4) außerhalb der axialen Erstreckung TA der Aufstandsfläche des Fahrzeugluftreifens der Verlauf der die Flanke (8) des Profilblockelements (14) bildenden Rillenwand längs der Haupterstreckungsrichtung der Rille (24) mit wenigstens einem Versatz quer zum Rillenverlauf ausgebildet ist.

## Claims

1. Pneumatic vehicle tyre with a profiled tread having profile elements (11, 14) - in particular profile block elements of a profile block row - which are separated from one another by channels (21, 24), wherein the channels (21, 24) have channel walls which extend radially outward from the channel base to the radially outer profile outside surface and which form in each case the flank (8, 9) of a profile element, and
at least one flank (8) which is formed by the channel wall of a channel (24) - in particular of a transverse or oblique channel - has, in the radial direction R, a first, radially outer region of extent and a second, radially inner region of extent, wherein the first region of extent extends radially inwards from the radially outer profile outside surface to the second region of extent, wherein in the second region of extent there is formed at least one depression (10) which extends into the profile element (14) and which has, in the channel wall, a section contour with limbs (15, 16) which extend apart in a V-shape or U-shape in the direction of extent of the channel (24), wherein the two limbs (15, 16) form a first corner at their intersection point (A), **characterized in that** the two other end points (B, C) of the limbs (15, 16) are connected to one another by a further - in particular rectilinear - contour line (17).

2. Pneumatic vehicle tyre according to the features of Claim 1,
wherein the channel (24) is a transverse or oblique channel and the two limbs (15, 16) which intersect at the first corner (A) are formed so as to extend apart in a V-shape or U-shape in the direction of extent from the closest tyre shoulder towards the tyre equatorial plane.

3. Pneumatic vehicle tyre according to the features of Claim 1, wherein the channel is a circumferential channel (5, 6, 7) of a pneumatic vehicle tyre which is directional in terms of direction of rotation, and the two limbs (15, 16) which intersect at the first corner are formed so as to extend apart in a V-shape or U-shape counter to the direction of rotation during forward travel.

4. Pneumatic vehicle tyre according to the features of Claim 1, 2 or 3, wherein the two limbs (15, 16) enclose a uniform opening angle over their entire extent proceeding from the first corner (A).

5. Pneumatic vehicle tyre according to the features of Claim 1, 2 or 3, wherein the two limbs (15, 16) are formed with an opening angle which varies along their longitudinal extent proceeding from the first corner (A).

6. Pneumatic vehicle tyre according to the features of Claim 5, wherein the two limbs (15, 16) are formed with an opening angle which is reduced - in particular steadily - along their longitudinal extent proceeding from the first corner (A).

7. Pneumatic vehicle tyre according to the features of Claim 6, wherein the two limbs (15, 16) are formed with an opening angle which decreases continuously along their longitudinal extent proceeding from the first corner (A).

8. Pneumatic vehicle tyre according to the features of Claim 1, 2 or 3,
wherein the two limbs (15, 16) have, proceeding from the first corner (A), at least one first, rectilinear region of extent (15a, 16a) with a first opening angle and an adjoining second region of extent (15c, 16c) which extends in each case to the other end point (B, C) of the limb (15, 16), wherein the two limbs (15, 16) have, in their second region of extent (15c, 16c), an opening angle which is smaller than or equal to the opening angle in the first region of extent (15a, 16a).

9. Pneumatic vehicle tyre according to the features of Claim 8,
wherein the two limbs (15, 16) have, between the first (15a, 16a) and the second (15c, 16c) regions of extent, a third (15b, 16b) region of extent which is shorter than the first (15a, 16a) and the second (15c, 16c) regions of extent in the direction of extent of the channel (21, 24), wherein in the third region of extent (15b, 16b), the opening angle of the two limbs (15, 16) is greater than the opening angle in the first region of extent (15a, 16a).

10. Pneumatic vehicle tyre according to the features of one or more of the preceding claims, wherein the depression (10) which extends into the profile element (11, 14) has a pyramid structure in which the section contour formed in the channel wall is the base surface on which the pyramid structure is formed, and having a tip (S) which has the dimension of the greatest extent T of the depression from the base surface into the profile element.

11. Pneumatic vehicle tyre according to the features of one or more of the preceding claims,
wherein the two other end points (B, C) of the two limbs (15, 16) have a spacing H from one another and the median (18) formed from the first corner (A) to the spacing line (17) which connects the two other ends (B, C) has a length L between the first corner (A) and the spacing line (17), wherein the following is true for H and L: (1/5)L ≤ H ≤ 2L, in particular H = 0.5L.

12. Pneumatic vehicle tyre according to the features of one or more of the preceding claims,
wherein the two profile elements (11, 14) which are separated by the channel (21, 24) are formed, in each case on their radially outer outside surface, with one or more sipes (25) which are formed in the direction of extent of the channel (21, 24).

13. Pneumatic vehicle tyre according to the features of one or more of the preceding claims,
wherein the profile element (11, 14) is formed, on its radially outer outside surface, with one or more sipes (25) which are formed in the direction of extent of the channel, wherein the sipe (25) closest to the flank (8, 9) formed with depression (10) is formed with a spacing b to the flank (8, 9), wherein 3 mm ≤ b ≤ 6 mm,
wherein that point (S) of the depression (10) which has the greatest spacing from the surface formed in the channel wall by the section contour has a spacing T from the surface formed in the channel wall by the section contour, wherein the following is true for T: T ≤ (3/4b), in particular T ≤ 1 mm.

14. Pneumatic vehicle tyre according to the features of one or more of the preceding claims, wherein the first, radially outer region of extent of the flank (8, 9) has, in the radial direction R, an extent c of at least 1 mm.

15. Pneumatic vehicle tyre according to the features of one or more of the preceding claims,
wherein the contour line (17) which connects the two other end points (B, C) of the limbs (15, 16) has a spacing a of at least 2 mm - in particular of at least 3.5 mm - from the channel wall of a second channel (5, 7) which intersects the channel (21, 24) .

16. Pneumatic vehicle tyre according to the features of one or more of the preceding claims,
wherein, in the direction of extent of the channel (21, 24), a plurality of depressions (10) are formed - in particular one behind the other in the direction of extent - in at least one flank (8).

17. Pneumatic vehicle tyre according to the features of one or more of the preceding claims,
wherein, in a circumferential direction U of the pneumatic vehicle tyre, in at least one tyre shoulder, there is formed a profile block row (4) with profile block elements (14) which are arranged one behind the other in the circumferential direction and which are spaced apart from one another by transverse channels (24), wherein at least in one transverse channel (14) - in particular in all of the transverse channels - of the profile block row (4), outside the axial extent TA of the tyre contact patch of the pneumatic vehicle tyre, the profile of the channel wall which forms the flank (8) of the profile block element (14) is formed, along the main direction of extent of the channel (24), with at least one offset transversely with respect to the channel profile.

## Revendications

1. Bandage pneumatique pour roue de véhicule, présentant une bande de roulement profilée dotée d'éléments profilés (11, 14), en particulier des éléments de blocs profilés d'une rangée de blocs profilés séparés les uns des autres par des rainures (21, 24), les rainures (21, 24) présentant des parois qui s'étendent, partant du fond des rainures, radialement vers l'extérieur jusqu'à des surfaces radialement extérieures de surfaces extérieures d'enveloppe de profilé et formant chaque fois les flancs (8, 9) d'un élément profilé,
au moins un flanc (8) formé par la paroi d'une rainure (24), notamment d'une rainure transversale ou d'une rainure oblique, présentant dans la direction radiale R une première partie d'extension radialement extérieure et une deuxième partie d'extension radialement intérieure,
la première partie d'extension s'étendant radialement vers l'intérieur depuis la surface radialement extérieure de l'enveloppe du profilé jusqu'à la deuxième partie d'extension,
au moins un épaississement (10) étendu étant formé dans l'élément profilé (14) dans la deuxième partie d'extension et présentant dans la paroi de la rainure un contour de coupe qui présente des ailes (15, 16) qui s'évasent en forme de v ou en forme de u dans la direction d'extension de la rainure (24), les deux ailes (15, 16) formant un premier coin en leur point de concours (A),
**caractérisé en ce que**
les deux autres points d'extrémité (B, C) des ailes (15, 16) sont reliés l'un à l'autre par une autre ligne de contour (17), notamment rectiligne.

2. Bandage pneumatique pour roue de véhicule présentant les caractéristiques de la revendication 1, dans lequel la rainure (24) est une rainure transversale ou une rainure oblique et en ce que les deux ailes (15, 16) qui se coupent au premier coin (A) sont configurés en forme de v ou de u dans la direction d'extension qui va de l'épaulement le plus proche du bandage de roue jusqu'au plan équatorial du bandage de roue.

3. Bandage pneumatique pour roue de véhicule présentant les caractéristiques de la revendication 1, dans lequel la rainure est une rainure périphérique (5, 6, 7) d'un bandage pneumatique pour roue de véhicule dont le sens de rotation est fixé et en ce que les deux ailes (15, 16) qui se coupent au niveau du premier coin s'évasent en forme de v ou en forme de u dans le sens opposé au sens de rotation avant.

4. Bandage pneumatique pour roue de véhicule présentant les caractéristiques des revendications 1, 2 ou 3, dans lequel les deux ailes (15, 16) forment le même angle d'ouverture entre le premier coin (A) et la totalité de leur extension.

5. Bandage pneumatique pour roue de véhicule présentant les caractéristiques des revendications 1, 2 ou 3, dans lequel les deux ailes (15, 16) présentent un angle d'ouverture qui varie le long de leur extension depuis le premier coin (A).

6. Bandage pneumatique pour roue de véhicule présentant les caractéristiques de la revendication 5, dans lequel les deux ailes (15, 16) présentent un angle d'ouverture qui se rétrécit, en particulier de manière continue, le long de leur extension à partir du premier coin (A).

7. Bandage pneumatique pour roue de véhicule présentant les caractéristiques de la revendication 6, dans lequel les deux ailes (15, 16) présentent un angle d'ouverture qui diminue de manière continue le long de leur extension à partir du premier coin (A).

8. Bandage pneumatique pour roue de véhicule présentant les caractéristiques des revendications 1, 2 ou 3, dans lequel les deux ailes (15, 16) présentent partant du premier coin (A) au moins une première partie rectiligne d'extension (15a, 16a) qui présente un premier angle d'ouverture, suivie par une deuxième partie d'extension (15c, 16c) qui s'étend jusqu'à l'autre point d'extrémité (B, C) de l'aile (15, 16), les deux ailes (15, 16) présentant dans leur deuxième partie d'extension (15c, 16c) un angle d'ouverture inférieur ou égal à l'angle d'ouverture de la première partie d'extension (15a, 16a).

9. Bandage pneumatique pour roue de véhicule présentant les caractéristiques de la revendication 8, dans lequel les deux ailes (15, 16) présentent entre la partie (15a, 16a) de leur extension et la deuxième partie (15c, 16c) de leur extension une troisième partie (15b, 16b) d'extension qui est plus courte dans la direction d'extension de la rainure (21, 24) que la première partie (15a, 16a) de leur extension et que la deuxième partie (15c, 16c) de leur extension, l'angle d'ouverture des deux ailes (15, 16) étant plus grand que l'angle d'ouverture dans la première partie (15a, 16a) de l'extension dans la troisième partie (15b, 16b) de l'extension.

10. Bandage pneumatique pour roue de véhicule présentant les caractéristiques d'une ou de plusieurs des revendications précédentes, dans lequel le creux (10) qui s'étend dans l'élément profilé (11, 14) présente une structure en pyramide dans laquelle le contour de la découpe formée dans la paroi de la rainure est la surface de base sur laquelle la structure en pyramide est formée, et avec une pointe (S) qui présente comme dimension la plus grande extension T du creux depuis la surface de base dans l'élément profilé.

11. Bandage pneumatique pour roue de véhicule présentant les caractéristiques d'une ou de plusieurs des revendications précédentes, dans lequel les deux autres points d'extrémité (B, C) des deux ailes (15, 16) présentent une distance mutuelle H et en ce que la bissectrice (18) des côtés formés par le premier coin (A) présente sur la ligne d'écartement (17) qui relie les deux autres extrémités (B, C) et le premier coin (A) une ligne d'écartement (17) une longueur L, avec pour H et L :
(1/5) L ≤ H ≤ 2 L et en particulier H = 0,5 L.

12. Bandage pneumatique pour roue de véhicule présentant les caractéristiques d'une ou de plusieurs des revendications précédentes, dans lequel les deux éléments profilés (11, 14) séparés par la rainure (21, 24) présentent tous deux sur leur surface d'enveloppe radialement extérieure une ou plusieurs fines entailles (25) formées dans la direction d'extension de la rainure (21, 24).

13. Bandage pneumatique pour roue de véhicule présentant les caractéristiques d'une ou de plusieurs des revendications précédentes, dans lequel l'élément profilé (11, 14) présente sur sa surface radialement extérieure d'enveloppe une ou plusieurs fines entailles (25) formées dans la direction d'extension de la rainure, la fine entaille (25) la plus proche du flanc (8, 9) présentant le creux (10) étant formée à une distance b par rapport au flanc (8, 9), avec 3 mm ≤b ≤ 6 mm,
le point (S) du creux (10) qui présente la plus grande distance par rapport à la surface formée par le contour de coupe dans la paroi de la rainure présentant une distance T par rapport à la surface formée par le contour de coupe dans la paroi de la rainure, avec pour T : T ≤ (3/4b) et en particulier T ≤ 1 mm.

14. Bandage pneumatique pour roue de véhicule présentant les caractéristiques d'une ou de plusieurs des revendications précédentes, dans lequel la première partie d'extension radialement extérieure du flanc (8, 9) présente dans la direction R une extension c d'au moins 1 mm.

15. Bandage pneumatique pour roue de véhicule présentant les caractéristiques d'une ou de plusieurs des revendications précédentes, dans lequel la ligne de contour (17) qui relie les deux autres points d'extrémité (B, C) des ailes (15, 16) présente une distance a d'au moins 2 mm et en particulier d'au moins 3,5 mm par rapport à la paroi d'une deuxième rainure (5, 7) qui coupe la rainure (21, 24).

16. Bandage pneumatique pour roue de véhicule présentant les caractéristiques d'une ou de plusieurs des revendications précédentes, dans lequel dans plusieurs creux (10), et notamment des creux qui s'étendent les uns derrière les autres dans la direction d'extension, sont formés dans un flanc (8) dans le sens d'extension de la rainure (21, 24).

17. Bandage pneumatique pour roue de véhicule présentant les caractéristiques d'une ou de plusieurs des revendications précédentes, dans lequel dans au moins un épaulement du bandage de roue, une rangée (4) de blocs profilés qui présente des éléments (14) de blocs profilés disposés les uns derrière les autres dans la direction périphérique et séparés les uns des autres par des rainures transversales (14) est formée dans la direction périphérique (U) du bandage pneumatique pour roue de véhicule et dans lequel, au moins dans une rainure transversale (14) et en particulier dans toutes les rainures transversales de la rangée (4) de blocs profilés, à l'extérieur de l'extension axiale TA de la surface d'appui au sol du bandage pneumatique du véhicule, l'évolution de la paroi de rainure qui forme les flancs (8) de l'élément (14) de blocs profilés présente au moins un décalage transversal par rapport à l'évolution de la rainure dans la direction d'extension principale de la rainure (24).
